# EUROPEAN PATENT APPLICATION

(11) **EP 4 541 438 A1**
(43) Date of publication of application: **23.04.2025**
(21) Application number: 24205306.4
(22) Date of filing: 08.10.2024
(51) Int. Cl.: A63F 13/213, G06T 7/00, G06T 13/40, G06T 19/00

(54) **METHOD, APPARATUS, DEVICE, MEDIUM AND PROGRAM FOR DISPLAYING A VIRTUAL CHARACTER**

(30) Priority: 19.10.2023 CN 202311361599
(71) Applicant: Beijing Zitiao Network Technology Co., Ltd., Beijing 100190 (CN)
(72) Inventor: LIN, Zeyi, Beijing, 100028 (CN); LI, Zeming, Beijing, 100028 (CN); ZHANG, Yang, Beijing, 100028 (CN); FAN, Zhen, Beijing, 100028 (CN)
(74) Representative: Dentons UK and Middle East LLP

(57) **Abstract**

Embodiments of the present application provide a method, apparatus, device, medium and program for displaying a virtual character. By obtaining a limb image of a human body, a skeleton length of a corresponding limb of the human body is determined based on the limb image. A virtual character is displayed. A skeleton length of a limb of the virtual character is determined based on the skeleton length of the limb of the human body. The method can automatically detect the skeleton length of the limb of the human body, adjust the skeleton length of the limb of the virtual character based on the skeleton length of the limb of the human body, achieve flexible adjustment of the skeleton length of the limb of the virtual character and improve user experience.

## Description

### CROSS-REFERENCE

The present application claims priority to Chinese Patent Application No. 202311361599.7, filed on October 19, 2023, and entitled "METHOD, APPARATUS, DEVICE, MEDIUM AND PROGRAM FOR DISPLAYING A VIRTUAL CHARACTER", the entirety of which is incorporated herein by reference.

### FIELD

Embodiments of the present application relate to the technical field of computer vision, in particular to a method, apparatus, device, medium and program for displaying a virtual character.

### BACKGROUND

Avatar is also referred to as a virtual character, which is an avatar of a virtual image of a network user in a virtual world with an image as a main. The virtual character can be applied to a network game as a game character in a game scene, and the virtual character can also be applied to a chat room as a chat avatar to communicate with other users. The user may interact with a virtual character, for example, control the virtual character to move, control the virtual character to perform a corresponding task, and the like. However, images of virtual characters in existing applications are predetermined fixed images, and the user cannot flexibly adjust the virtual characters.

### SUMMARY

The embodiments of the present application provide a method, apparatus, device, medium and program for displaying a virtual character, which can automatically detect the skeleton length of the limb of the human body, adjust the skeleton length of the limb of the virtual character based on the skeleton length of the limb of the human body, achieve flexible adjustment of the skeleton length of the limb of the virtual character and improve user experience.

In a first aspect, the embodiments of the present application provide a method of displaying a virtual character which includes:
obtaining a limb image of a human body;
determining a skeleton length of a corresponding limb of the human body based on the limb image; and
displaying a virtual character, a skeleton length of a limb of the virtual character being determined based on the skeleton length of the limb of the human body.

In some embodiments, the method further includes:
determining a further skeleton length of the human body based on the skeleton length of the limb of the human body; and
adjusting a further skeleton length of the virtual character based on the further skeleton length of the human body.

In some embodiments, the method further includes:
obtaining a height of the human body;
determining the further skeleton length of the human body based on the skeleton length of the limb of the human body includes:
   determining the further skeleton length of the human body based on the height of the human body and the skeleton length of the limb of the human body.

In some embodiments, determining the skeleton length of the corresponding limb of the human body based on the limb image includes:
identifying joint points of the limb of the human body based on the limb image;
determining three-dimensional (3D) coordinates of the joint points of the limb of the human body based on the limb image; and
determining the skeleton length of the limb of the human body based on the 3D coordinates of the joint points of the limb of the human body.

In some embodiments, a head-mounted device uses a binocular camera to capture the limb image; and determining the 3D coordinates of the joint points of the limb of the human body based on the limb image includes:
determining the 3D coordinates of the joint points of the limb of the human body based on the limb image and a binocular parallax principle.

In some embodiments, identifying the joint points of the limb of the human body based on the limb image includes:
inputting the limb image into a human body key point identification network to obtain the joint points of the limb of the human body.

In some embodiments, obtaining the height of the human body includes: receiving the height of the human body input by a user or detecting the height of the human body.

In some embodiments, obtaining the limb image of the human body includes:
collecting the limb image through a camera of a head-mounted device;
wherein the virtual character is displayed in an extended reality scene of the head-mounted device.

In some embodiments, the limb image is a limb image of a human body wearing the head-mounted device.

In some embodiments, the method further includes:
obtaining posture information of the human body; and
displaying the virtual character includes:
   displaying the virtual character based on the posture information of the human body.

In some embodiments, the method further includes:
in response to detecting that a user starts an application, displaying a start option of a skeleton adjustment function of the virtual character, the skeleton adjustment function of the virtual character being used to adjust a skeleton length of the virtual character;
in response to a determination instruction for the start option, enabling the skeleton adjustment function of the virtual character; and
displaying prompt information for prompting the user to extend both hands forward and kick forward with a left leg or a right leg.

In some embodiments, the obtaining posture information of the human body includes: determining the posture information of the human body through inertial data measured by an inertial sensor (IMU) worn by the human body.

In some embodiments, the limb image includes an upper limb image and a lower limb image, the upper limb image includes a left upper limb and a right upper limb, and the lower limb image includes a left lower limb image and a right lower limb image; and
the determining a skeleton length of a corresponding limb of the human body based on the limb image includes:
determining a skeleton length of an upper limb of the human body based on the upper limb image; and
determining a skeleton length of a lower limb of the human body based on the left lower limb image and the right lower limb image.

In some embodiments, joint points of the upper limb include: a shoulder node, an elbow node, a wrist node and a finger node; and
joint points of the lower limb include: a hip node, a knee node, an ankle node, and a toe node.

In a second aspect, the embodiments of the present application provide an apparatus for displaying a virtual character, which includes:
an image obtaining module configured to obtain a limb image of a human body;
a determination module configured to determine a skeleton length of a corresponding limb of the human body based on the limb image; and
a displaying module configured to display a virtual character, a skeleton length of a limb of the virtual character being determined based on the skeleton length of the limb of the human body .

In a third aspect, the embodiments of the present application provide an electronic device, which includes a processor and a memory, wherein the memory is configured to store a computer program, and the processor is configured to call and run the computer program stored in the memory to perform the method according to any of the foregoing embodiments.

In a fourth aspect, the embodiments of the present application provide a computer readable storage medium configured to store a computer program, and the computer program causes a computer to perform the method according to any of the foregoing embodiments.

In a fifth aspect, the embodiments of the present application provide a computer program product including a computer program, wherein the computer program, when executed by a processor, implements the method according to any of the foregoing embodiments.

### BRIEF DESCRIPTION OF DRAWINGS

In order to more clearly illustrate the technical solutions in the embodiments of the present disclosure, the accompanying drawings used in the description of the embodiments will be briefly introduced below. Apparently, the drawings in the following description are merely some embodiments of the present disclosure, and for those skilled in the art, other drawings may be obtained according to these drawings without creative efforts.
FIG. 1 is a flowchart of a method of displaying a virtual character provided by Embodiment 1 of the present application.
FIG. 2 is a flowchart of a method of displaying a virtual character provided by Embodiment 2 of the present application.
FIG. 3 is a flowchart of a method of displaying a virtual character provided by Embodiment 3 of the present application.
FIG. 4 is a schematic diagram of an upper limb image captured by a binocular camera.
FIG. 5 is a schematic diagram of a left lower limb image captured by a binocular camera.
FIG. 6 is a schematic diagram of a right lower limb image captured by a binocular camera.
FIG. 7 is a flowchart of a method of displaying a virtual character provided by Embodiment 4 of the present application.
FIG. 8 is a schematic diagram of a structure of an apparatus for displaying a virtual character provided by Embodiment 5 of the present application.
FIG. 9 is a schematic diagram of a structure of an electronic device provided by Embodiment 6 of the present application.

### DETAILED DESCRIPTION

The technical solutions in the embodiments of the present disclosure will be clearly and completely described below with reference to the accompanying drawings in the embodiments of the present disclosure. Apparently, the described embodiments are only a part of the embodiments of the present disclosure, and are not all embodiments. All other embodiments obtained by those skilled in the art without creative efforts shall fall within the scope of the present disclosure.

It should be noted that the terms "first", "second", and the like in the specification and claims of the present disclosure and the foregoing drawings are used to distinguish similar object, and are not necessarily used to describe a specific order or sequence. It should be understood that such used data may be interchanged where appropriate so that the embodiments of the present disclosure described herein can be implemented in an order other than those illustrated or described herein. Moreover, the terms "comprising" and "having" and any deformation thereof are intended to cover a non-exclusive inclusion, e.g., a process, method, system, product, or server containing a series of steps or units not necessarily limited to those steps or units expressly listed, but may include other steps or units not expressly listed or inherent to such processes, methods, products, or devices.

The embodiments of the present application provide a method of displaying a virtual character, which may be applied to an electronic device. An application (application, for short) of the electronic device provides a virtual scene, and a virtual character is displayed in the virtual scene. The electronic device may be a mobile phone, a tablet, a personal computer, a server, an intelligent wearable device, an extended reality (XR) device, or the like.

If the method provided in the embodiments of the present application is applied to a mobile phone, a tablet, a personal computer, a server, or an intelligent wearable device, the virtual scene provided by the electronic device is a 2D virtual scene. If the method provided in the embodiments of the present application is applied to an XR device or a server that provides an XR application, a virtual scene provided by the electronic device is a 3D virtual scene, and the 3D virtual scene is also referred to as an extended reality scene.

XR refers to a collective term of a variety of technologies such as virtual reality (VR), augmented reality (AR), and mixed reality (MR) by combining reality and virtuality by a computer to create a virtual environment for human-computer interaction. By fusing the visual interaction techniques of the three, a seamless transition "immersion" between the virtual world and the real world is brought to the experiencer. XR devices are typically worn on a user's head, and thus an XR device is also referred to as a head-mounted device.

VR: a technology for creating and experiencing a virtual world, calculates and generates a virtual environment, which is a multi-source information (the virtual reality mentioned herein includes at least visual perception, and may also include auditory perception, tactile perception, motion perception, and even further include taste perception, olfactory perception, etc.), implements simulation of a fused, interactive three-dimensional dynamic visual and physical behavior of a virtual environment, enables a user to be immersed into a simulated virtual reality environment, and implements an application of a plurality of virtual environments such as maps, games, videos, education, medical treatment, simulation, collaborative training, sales, assisted manufacturing, maintenance, and repair.

A VR device refers to a terminal implementing a virtual reality effect, and may generally be provided as a form of glasses, a head mount display (HMD) and a contact lens, so as to implement visual perception and other forms of perception, and of course, the form of the virtual reality device is not limited thereto, and may be further miniaturized or miniaturized according to needs.

AR: AR scenery refers to a simulated scenery in which at least one virtual object is superimposed on a physical scenery or a representation thereof. For example, an electronic system may have an opaque display and at least one imaging sensor for capturing images or videos of physical scenery, which are representations of physical scenery. The system combines the image or video with the virtual object and displays the combination on the opaque display. The individual uses the system to indirectly view the physical scenery via the image or video of the physical scenery, and observe the virtual object superimposed over the physical scenery. If the system captures the image of the physical scenery using one or more image sensors and uses those images to render the AR scenery on the opaque display, the displayed image is referred to as video transparent. Alternatively, the electronic system for displaying the AR scenery may have a transparent or semi-transparent display through which the individual may directly view the physical scenery. The system may display the virtual object on the transparent or semi-transparent display such that the individual uses the system to observe the virtual object superimposed over the physical scenery. As another example, the system may include a projection system that projects the virtual object into the physical scenery. The virtual object may be projected, for example, on a physical surface or as a hologram, such that the individual uses the system to observe the virtual object superimposed over the physical scenery. Specifically, in a process of capturing an image by a camera, camera posture information parameters of the camera in a real world (or referred to as a three-dimensional world and a reality world) are calculated in real time, and a technology for adding virtual elements to an image captured by the camera according to the camera posture information parameters. The virtual elements include, but are not limited to: images, videos, and three-dimensional models. A goal of AR technology is to sleeve the virtual world into the real world on the screen for interaction.

MR: By presenting virtual scene information in a real scene, an information loop for interactive feedback is established between the real world, the virtual world and the user, to enhance the realism of user experience. For example, a computer-created sensory input (e.g., virtual objects) is integrated with sensory input from a physical scenery or a representation thereof in a simulated scenery. In some MR scenery, a computer-created sensory input may be adapted to changes in sensory input from the physical scenery. Additionally, some electronic systems for presenting MR scenery may monitor orientation and/or position information relative to physical scenery to enable the virtual objects to interact with real objects (i.e., physical elements from physical scenery or representations thereof). For example, the system may monitor motion such that a virtual plant appears stationary relative to a physical building.

Optionally, the XR device described in the embodiments of the present application is also referred to as a virtual reality device, and may include, but is not limited to, the following types:
1)A mobile virtual reality device supports setting a mobile terminal (such as a smart phone) in various manners (for example, a head-mounted display provided with a special card slot), performing related calculation of the virtual reality function by the mobile terminal by connecting with the mobile terminal in a wired or wireless manner, and outputting data to the mobile virtual reality device, for example, viewing a virtual reality video through an APP of the mobile terminal.
2)An all-in-one machine virtual reality device has a processor for performing related calculation of virtual functions, and thus has independent virtual reality input and output functions. It does not need to be connected with a PC end or a mobile terminal and has a high degree of freedom in use.
3)A personal computer virtual reality (PCVR) device uses a PC end to perform related calculation and data output of a virtual reality function, and an external personal computer virtual reality device uses data output by a PC end to achieve an effect of virtual reality.

After the following describes some concepts related to the embodiments of the present application, a method of displaying a virtual character provided in the embodiments of the present application is specifically described below with reference to the accompanying drawings.

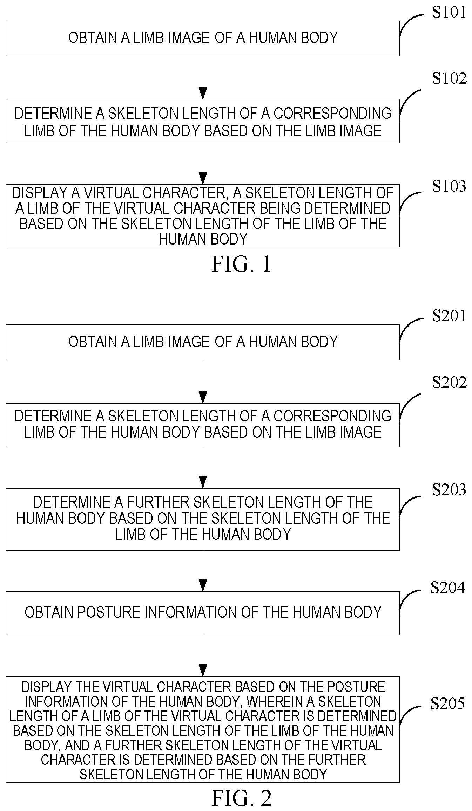

FIG. 1 is a flowchart of a method of displaying a virtual character provided by Embodiment 1 of the present application. The method in this embodiment is performed by an electronic device, and the electronic device may be an XR device, a server, a mobile phone, a tablet, a personal computer, an intelligent wearable device, and the like. As shown in FIG. 1, the method provided in this embodiment includes the following steps.

At S101, obtain a limb image of a human body.

The limb of the human body includes an upper limb and a lower limb. The upper limb may include a upper arm, a lower arm, and a hand, and the lower limb may include a thigh, a shank, and a foot. The limb image of the human body obtained in this step may include only the upper limb image of the human body, or may include only the lower limb image of the human body, and may also include both the upper limb image and the lower limb image of the human body, such as a whole-body image.

The limb image of the human body may be an image captured in real time by using a camera, or may be an offline captured limb image. The limb image of the human body may be captured by a camera of the electronic device performing the method of this embodiment, or may be captured by a camera of another electronic device, and after other electronic devices capture the limb image of the human body, the limb image is sent to the electronic device performing the method of this embodiment.

Taking the XR application as an example, if the method of this implementation is performed by a first head-mounted device, and the captured limb image of the human body is a limb image of a user A wearing the first head-mounted device, the limb image of the human body may be obtained in the following several manners.

In a first implementation, one or more cameras are installed on the first head-mounted device, and the limb image of the human body of the user A is collect by using the camera(s) of the first head-mounted device.

For example, 6 cameras are installed on a common head-mounted device. 6 cameras are installed at different positions and different angles, images captured by different cameras are different, and an upper limb image and lower limb image of the human body may be captured through two cameras on the front side of the head-mounted device.

In a second implementation, the limb image of the human body of the user A is collected by a camera of a second head-mounted device, and the limb image of the human body of the user A captured by the second head-mounted device is sent to the first head-mounted device.

The second head-mounted device and the first head-mounted device are in the same physical space. The second head-mounted device is worn by the user B, and one or more cameras are mounted on the second head-mounted device. Optionally, in this implementation, the head-mounted devices of the two user may capture limb images of the human body of each other, and send the limb images to another head-mounted device, which is applicable to some multiplayer game scenes, where multiple users are located in the same physical space, and establish connections to each other.

In a third implementation, the first head-mounted device receives the limb image of the human body of the user A collected by a camera installed in the physical space.

In this implementation, one or more cameras are deployed in the physical space. The plurality of cameras is connected to the first head-mounted device. Limb images of the human body of the user A are collected through the camera(s) deployed in the physical space, and sent to the first head-mounted device.

At S102, determine a skeleton length of a corresponding limb of the human body based on the limb image.

The limb of the human body comprises a plurality of skeletons. The skeletons of the upper limb of the human body and the skeletons of the lower limb each comprise a plurality of skeletons. The upper limb of the human body comprises a left upper limb and a right upper limb, and the lower limb of the human body comprises a left lower limb and a right lower limb. In general, a skeleton length of the left upper limb of the human body and a skeleton length of the right upper limb of the human body are the same, and the skeletons of the left lower limb and the right lower limb of the human body are the same in length, which collectively are referred to as the skeleton length of the upper limb and the skeleton length of the lower limb.

For example, the skeleton length of the limb of the human body is determined in the following manner: identifying joint points of the limb of the human body according to the limb image, determining 3D coordinates of the joint points of the limb of the human body according to the limb image, and determining the skeleton length of the limb of the human body according to the 3D coordinates of the joint points of the limb of the human body.

If the limb image only includes the upper limb image of the human body, the obtained skeleton length of the limb of the human body is the skeleton length of the upper limb. If the limb image only includes the lower limb image of the human body, the obtained skeleton length of the limb of the human body is the skeleton length of the lower limb. If the limb image includes the upper limb image of the human body and the lower limb image of the human body, the obtained skeleton length of the limb of the human body includes the skeleton length of the upper limb and the skeleton length of the lower limb. The method for determining the skeleton length of the upper limb and the skeleton length of the lower limb is the same.

It can be understood that in different human body models, the joint points included in the limbs of the human body may be different. In an example embodiment, the joint points of the upper limb include a shoulder node, an elbow node, a wrist node, and a finger node. The joint points of the lower limb include a hip node, a knee node, an ankle node, and a toe node.

Optionally, the hand may include one or more joint points, for example, the hand includes two joint points: a palm joint point and a finger end joint point. When determining the joint points of the upper limb, the finger node may be the palm joint point or the finger end joint point of the hand, or may include the palm joint point and finger end joint point of the hand at the same time.

Identifying a joint point of a limb of the human body refers to identifying a 2D coordinate (that is, a pixel coordinate) of a joint point in an image. The joint point of the limb may be determined by using an existing Human Key points Detection algorithm, wherein the human key points detection is a basic task in computer vision, and is a front task of human body action identification, behavior analysis, human-computer interaction, and the like.

**Optionally,** the joint point of the limb of the human body may be identified by using a neural network, and the limb image of the human body is input into the human body key point identification network to obtain the joint point of the limb. Optionally, the human body key point identification network is a deep learning network.

After determining the 2D coordinates of the joint point of the limb, the 3D coordinates of the joint point of the limb may be determined according to the depth information of the joint point or in other manners. Taking the head-mounted device as an example, if the head-mounted device uses the binocular camera, the 3D coordinates of the joint point of the limb may be determined according to the limb image and the binocular parallax principle. The 3D coordinates of the joint point may be coordinates in a world coordinate system or coordinates in a coordinate system of the head-mounted device.

It may be understood that other methods may also be used to calculate the 3D coordinates of the joint points of the limbs, which is merely an example, for example, for a monocular camera, the 3D coordinates of the joint points of the limbs may be calculated by using images captured at different moments.

The adjacent joint points of the human body are connected to form the skeleton of the human body. The joint points of the upper limb include: a shoulder node, an elbow node, a wrist node and a finger node as an example, the 4 joint points form 3 skeletons of the upper limb, which are respectively referred to as an upper arm, a lower arm and a hand. Similarly, if the joint points of the lower limb include a hip node, a knee joint, an ankle node, and a toe node, 3 skeletons of the lower limb are formed, which are respectively referred to as a thigh, a shank, and a foot.

The length of the skeleton refers to a length between two joint points connected to a skeleton. The skeleton length of the upper limb includes: the lengths of the upper arm, the lower arm and the hand, and the skeleton length of the lower limb includes the lengths of the thigh, the shank and the foot. After the 3D coordinates of the joint points of the upper limb and the lower limb are determined, the length of the skeleton may be determined according to the 3D coordinates of the two joint points forming the skeleton.

In this embodiment, the 3D coordinates of various joint points of the left upper limb and the right upper limb may be respectively determined. The skeleton lengths of the left upper limb and the right upper limb are determined according to the 3D coordinates of the joint points of the left upper limb and the right upper limb, and then the skeleton length of the upper limb is determined according to the skeleton length of the left upper limb and the skeleton length of the right upper limb. For example, the average value of the lengths of the same skeletons of the left upper limb and the right upper limb may be taken as the skeleton length of the upper limb. For example, the average value of the skeleton length of the left upper arm and the skeleton length of the right upper arm may be calculated as the skeleton length of the upper arm of the upper limb. By adopting the same method, the skeleton length of the lower limb is calculated.

Optionally, in order to improve the accuracy of the determined length of the skeleton, the limb images at multiple moments may be collected. The skeleton lengths of the limbs at multiple moments are calculated respectively, and the skeleton lengths of the limbs at the multiple moments are fused, for example, the skeleton lengths of the limbs at multiple moments are fused by using an average algorithm, a voting election, or other manners.

The key point detection method adopted in the above mode is 2D key point detection. Optionally, 3D key point detection method can be adopted to determine the 3D coordinates of the joint points of the limb of the human body. Optionally, the 3D key point detection method may adopt a deep learning network.

Deep learning is a type of machine learning, and deep learning forms a more abstract high-level representations of attribute types or features by combining low-level features to discover distributed feature representations of data. The motivation of deep learning is to establish a neural network for simulating the human brain for analysis and learning. The deep learning network may be a convolutional neural network (CNN) or a deep belief network (DBN).

At S103: display a virtual character, a skeleton length of a limb of the virtual character being determined based on the skeleton length of the limb of the human body.

After the skeleton length of the limb of the human body is determined, the limb skeleton length of the virtual character may be determined (or referred to as set or adjusted) according to the skeleton length of the limb of the human body, and the virtual character is displayed in the virtual scene according to the determined skeleton length of the virtual character. The virtual scene may be a 2D virtual scene or an extended reality scene of 3D.

According to the skeleton length of the limb of the virtual character determined according to the skeleton length of the limb of the human body, the skeleton length of the limb of the virtual character is matched with the skeleton length of the limb of the human body, and the skeleton length of the limb of the virtual character matching with the skeleton length of the limb of the human body may be the skeleton length of the limb of the virtual character being the same as the skeleton length of the limb of the human body. Therefore, the displayed character image of the virtual character is closer to the image of the human body, the action of the virtual character is more natural, the user expectation is met, and the user experience is improved.

In this embodiment, by obtaining the limb image of the human body, the skeleton length of the corresponding limb of the human body is determined according to the limb image, the virtual character is displayed, and the skeleton length of the limb of the virtual character is determined according to the skeleton length of the limb of the human body. The method can automatically detect the skeleton length of the limb of the human body, adjust the skeleton length of the limb of the virtual character according to skeleton length of the limb of the human body, achieve flexible adjustment of the skeleton length of the limb of the virtual character, and improve user experience.

Based on Embodiment 1, Embodiment 2 of the present application provides a method of displaying a virtual character, the same content is referred to related description of Embodiment 1. FIG. 2 is a flowchart of the method of displaying a virtual character provided by Embodiment 2 of the present application, and as shown in FIG. 2, the method provided in this embodiment includes the following steps.

At S201, obtain a limb image of a human body.

At S202, determine a skeleton length of a corresponding limb of the human body based on the limb image.

At S203, determine a further skeleton length of the human body based on the skeleton length of the limb of the human body.

The skeletons of the human body, in addition to the upper limb skeletons and the lower limb skeletons, further includes other skeletons, for example, skeletons of the neck to the chest, skeletons of the chest to the waist (or the abdomen), skeletons of the head, and the like.

Other skeletons of the human body include one or more of the remaining skeletons of the human body, and the remaining skeletons of the human body refer to all the remaining skeletons of the human body other than the skeletons of the limb of the human body determined according to the limb image.

In an example embodiment, a standard human body model may be defined, and for the standard human body model, there is a certain proportional relationship between the lengths of various skeletons of the human body. Therefore, the skeleton length of the neck to the chest, the skeleton length of the chest to the waist and the like may be determined according to the skeleton length of the upper limb and/or the skeleton length of the lower limb and the proportional relationship between the skeleton lengths of the human body model, so that other skeleton lengths of the human body can be predicted.

In another example embodiment, the lengths of the remaining skeletons of the human body may be predicted by using the neural network model, and the skeleton length of the upper limb and/or the skeleton length of the lower limb may be input to a pre-trained skeleton prediction model to obtain the lengths of the remaining skeletons of the human body.

In another example embodiment, the height of the human body is obtained, and the other skeleton lengths of the human body are determined according to the height of the human body and the determined skeleton lengths of the limbs of the human body.

Optionally, the height of the human body may be obtained by receiving the height of the human body input by the user or detecting the height of the human body. The height of the human body may be measured by a positioning module or a sensor of the electronic device.

All skeleton lengths of the human body may be obtained by this step. Further, the skeleton length of the virtual character may be adjusted according to the skeleton length of the human body, so that the skeleton length of the virtual character matches the skeleton length of the human body.

At S204: obtain posture information of the human body.

This step is an optional step, the posture information of the human body refers to posture information of each joint point of the human body. The posture information of the joint point may refer to a rotation angle of the joint point, or a relative rotation angle of the joint point relative to the other related joint points.

The posture information of the human body may be obtained by the electronic device based on various sensor detections or further calculated or may be detected by other devices and sent to the electronic device. In this embodiment, there is no limitation on the obtaining method of posture information of the human body, and any existing human action captured method can be used to obtain the posture information of the human body.

At S205: display the virtual character based on the posture information of the human body, wherein a skeleton length of a limb of the virtual character is determined based on the skeleton length of the limb of the human body, and a further skeleton length of the virtual character is determined based on the further skeleton length of the human body.

The skeleton length of the limb of the human body and the other skeleton lengths of the human body may be collectively referred to as the skeleton length of the human body. Optionally, after obtaining the skeleton length of the human body, the electronic device may determine the skeleton length of the virtual character according to the skeleton length of the human body in a unified manner. Alternatively, after obtaining the skeleton length of the limb of the human body, the skeleton length of the limb of the virtual character may be determined first, and then after obtaining the lengths of other skeletons of the human body, the skeleton lengths of the virtual character may be determined based on the lengths of other skeletons of the human body.

Optionally, the electronic device displays the virtual character according to the posture information of the human body. The human body corresponding to the posture information of the human body is the human body in the aforementioned limb image. The virtual character may be driven to move according to the posture information of the human body, for example, drive the animation character in the 3D animation to move, or drive the virtual human in the live streaming scene to move, or drive the game character in the game scene to move.

In this embodiment, after the skeleton length of the limb of the human body is determined, other skeleton lengths of the human body are determined according to the skeleton length of the limb of the human body. The posture information of the human body is obtained. The virtual character is displayed according to the posture information of the human body. The length of the limb skeleton of the virtual character is determined according to the skeleton length of the limb of the human body, and the lengths of other skeletons of the virtual character are determined according to the lengths of other skeletons of the human body. According to the method, the skeleton length of the limb of the human body can be obtained, and the other skeleton length of the human body can be obtained, so that the skeleton length of the virtual character can be adjusted according to the skeleton length of the human body, the skeleton length of the virtual character is flexibly adjusted, and the user experience is improved.

The method of the embodiments of the present application is applied in the XR application. In the XT application, the posture information of the human body can be obtained through the action capturing method, and the virtual character in the extended reality space is driven according to the posture information of the human body.

The posture information of the human body refers to the posture information of each joint point of the human body, and the posture information of the joint point may be the rotation angle of the joint point, or may be the relative rotation angle of the joint point relative to other related joint points.

In different applications, the defined human body model may be different, and the joint points of different models may be different. For example, the human body model includes a head node, a left shoulder joint, a right shoulder joint, a left elbow Node, a right elbow joint, a left wrist node, a right wrist node, a left hand node, a right hand node, a waist node, a left hip joint, a right hip joint, a left knee joint, a right knee joint, a left ankle node, a left foot node, a right foot node, and the like, where the left hip node and the right hip node may also be understood as a left thigh joint and a right thigh joint.

The waist node is the root node of the human body, and the root node is a hypothetical node located in the pelvis, which is used to represent the position of the human body in the world coordinate system.

The skeletons of the human body are closely tied together by joint points. The skeletons of the human body are made up of pieces, and to form the human body's structure, the joint points are needed to connect them. The joint point is rotatable. The rotation amount of the coordinate system of each joint point represents the direction of the joint, and the rotation angle of the joint point may be represented by the rotation matrix of the joint point.

If the virtual character is driven to move according to the posture information of the human body, the root node of the virtual character is controlled to move according to the movement (that is, the displacement) of the position information of the root node of the human body, and each joint point of the virtual character is controlled to rotate according to the posture information of each joint point of the human body, thereby completing the driving of the virtual character.

In practical applications, the skeleton length of the virtual character may not match the skeleton length of the human body driving the virtual character to move. For example, the skeleton length of the virtual character is greater than or less than the skeleton length of the human body. If the skeleton length of the virtual character does not match the skeleton length of the human body, it may cause the virtual character's movements to be stiff, unnatural, or incorrect. For example, the virtual character may clip through or slide step.

The clipping through of the virtual character refers to the phenomenon that when a body part of the virtual character comes into contact with itself or other virtual objects, the body part of the virtual character passes through itself or other virtual objects. In a normal case, he body part of the virtual character will not pass through itself or other virtual objects when they come into contact with the surface of itself or other virtual objects.

Taking a hand clipping through of the virtual character as an example, the hand clipping through refers to a problem that two hands of the virtual character pass through each other in contact, for example, two hands of a user in a real space (that is, a physical space)put his hands together, and two hands of the virtual character pass through each other due to the hand clipping through. If the virtual character is driven according to the posture information of the human body, the skeleton of the human body and the skeleton of the virtual character rotate at the same angle. Since the skeleton length of the virtual character is different from the skeleton length of the human body, after the same angle is rotated, the two hands of the human body are put together, and the hands of the virtual character have clipped through each other.

The foot of the virtual character also has a foot clipping through and a sliding step problem, the foot clipping through refers to that the foot of the virtual character passes through (falls into) the ground, and the foot sliding step refers to the phenomenon that the foot slides on the ground. The problem of foot clipping through is that the skeleton length of the virtual character is different from that of the human body, and after the same angle is rotated according to the posture information of the human body, the coordinate of the foot on the Y-axis is lower than the ground, making it appear to the user that the foot of the virtual character passes through the ground. Due to the fact that the skeleton length of the virtual character is different from the skeleton length of the human body, when moving the same distance, the virtual character may generate a sliding step due to the fact that the leg is too short. For example, the human body takes one step for a distance of 0.5 meters, but the virtual character has shorter legs, so the virtual character takes one step for a distance of 0.4 meters. For the virtual character to move 0.5 meters, the legs of the virtual character will slide.

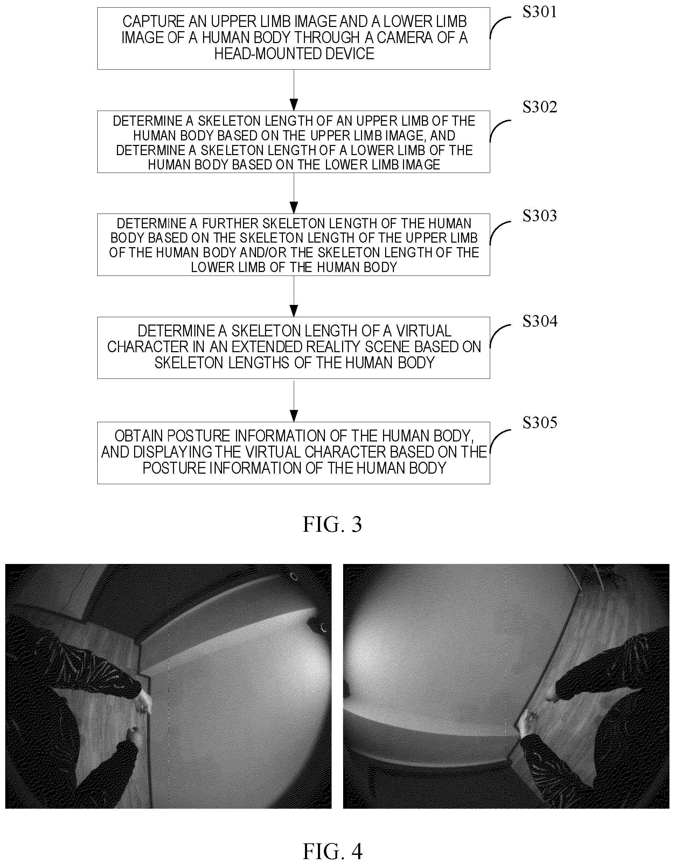

The method provided in the embodiments of the present application may resolve the problem, and is specifically described in the following embodiments. FIG. 3 is a flowchart of a method of displaying a virtual character provided by Embodiment 3 of the present application. The method in this embodiment is performed by an XR device. If the XR device is an all-in-one machine, the XR device is a head-mounted device. If the XR device is not an all-in-one machine, the XR device includes a head-mounted device and a terminal device (for example, a mobile phone or a computer) connected to the head-mounted device. As shown in FIG. 3, the method of displaying a virtual character includes the following steps.

At S301: capture an upper limb image and a lower limb image of a human body through a camera of a head-mounted device.

In this embodiment, taking the head-mounted device itself collecting the limb image of the human body wearing the head-mounted device as an example for description, it may be understood that in other embodiments of the present application, the upper limb image and the lower limb image of the human body may also be collected by other head-mounted devices.

One or more cameras are installed on the head-mounted device, and the upper limb image and the lower limb image of the human body are captured by the camera.

Optionally, the upper limb image captured by the camera includes a left upper limb image and a right upper limb image, and after a skeleton length adjustment function of the virtual character of the APP is activated, the head-mounted device may output prompt information, where the prompt information is used to prompt the user to extend both hands forward, the user may lift both hands forward at the same time, the camera of the head-mounted device captures the upper limb image, and the captured upper limb image includes the left upper limb image and the right upper limb image.

Referring to FIG. 4, which is a schematic diagram of an upper limb image captured by a binocular camera. The left image is an image captured by a left camera, and the right image is an image captured by a right camera. Two upper limb images captured by the binocular camera are images at the same moment, and angles of the two cameras are different, so that the captured upper limb images are also different.

Optionally, the lower limb image captured by the camera includes a left lower limb image and a right lower limb image, and after the upper limb image of the human body is captured, the head-mounted device may output prompt information, where the prompt information is used to prompt the user to kick forward with the left leg. After capturing the left lower limb image, the user is prompted to kick forward with the right leg, and the camera captures the right lower limb image.

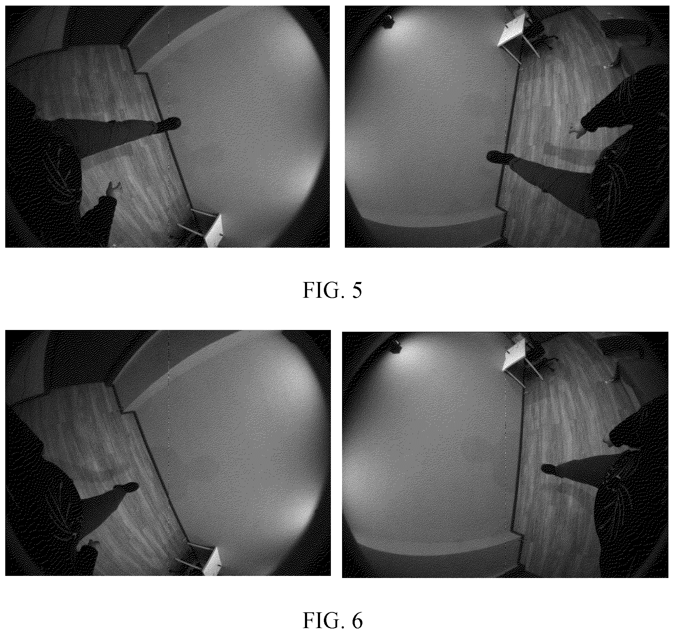

Referring to FIG. 5 and FIG. 6, where FIG. 5 is a schematic diagram of a left lower limb image captured by a binocular camera, FIG. 6 is a schematic diagram of a right lower limb image captured by a binocular camera, and angles of the two cameras are different, so that the captured left lower limb image and the captured right lower limb image are also different.

Optionally**,** in an implementation, the upper limb image may include a left upper limb image and a right upper limb image, that is, the camera captures the left upper limb and the right upper limb separately.

At S302: determine a skeleton length of an upper limb of the human body based on the upper limb image, and determine a skeleton length of a lower limb of the human body based on the lower limb image.

For example, the skeleton length of the upper limb of the human body and the skeleton length of the lower limb of the human body are determined by: identifying joint points of the upper limb according to the upper limb image, and identifying joint points of the lower limb according to the lower limb image; determining the 3D coordinates of the joint points of the upper limb according to the upper limb image, and determining the 3D coordinates of the joint points of the lower limb according to the lower limb image; determining the skeleton length of the upper limb according to the 3D coordinates of the joint points of the upper limb, and determining the skeleton length of the lower limb according to the 3D coordinates of the joint points of the lower limb.

For a specific implementation of this step, refer to the description of the foregoing related embodiments, and details are not described herein again.

At S303, determine a further skeleton length of the human body based on the skeleton length of the upper limb of the human body and/or the skeleton length of the lower limb of the human body.

Other skeletons of the human body include, but are not limited to, the skeletons of the neck to the chest, the skeletons of the chest to the waist (or abdomen), the skeletons of the head, and the like.

In an example implementation, the skeleton length of the neck to the chest, the skeleton length of the chest to the waist, and the like may be determined according to the skeleton length of the upper limb of the human body and/or the skeleton length of the lower limb of the human body, and the preset proportion relationship between the skeleton lengths of the human body model, so that other skeleton lengths of the human body can be predicted.

In another example implementation, the skeleton length of the upper limb of the human body and/or the skeleton length of the lower limb of the human body are input to a pre-trained skeleton prediction model to obtain other skeleton lengths of the human body.

In another example implementation, the height of the human body is obtained, and the other skeleton lengths of the human body are determined according to the height of the human body, the skeleton length of the upper limb of the human body, and / or the skeleton length of the lower limb of the human body.

At S304: determine a skeleton length of a virtual character in an extended reality scene based on skeleton lengths of the human body.

The skeleton length of the human body includes the skeleton length of the upper limb of the human body, the skeleton length of the lower limb of the human body, and other skeleton lengths. The skeleton length of the virtual character is adjusted according to the determined skeleton length of the human body, wherein the adjusted skeleton length of the virtual character matches the skeleton length of the human body. The skeleton length of the virtual character matching the skeleton length of the human body may be the skeleton length of the virtual character being the same as the skeleton length of the human body.

At S305: obtain posture information of the human body, and display the virtual character based on the posture information of the human body.

For example, the posture information of the human body may be determined by inertial data measured by an inertial measurement sensor (IMU) worn by the human body.

The user may wear a plurality of IMUs to determine the posture information of the human body. For example, the user wears the IMUs on the two wrists, the two ankles and the waist, the posture information of the related joint points is calculated according to the inertial data measured by the IMUs and a constraint relationship between various limbs of the human body. Optionally, the posture of the human body may be determined according to the inertial data measured by the IMUs and position information of the head-mounted device. The position information of the head-mounted device is position information of the head of the human body, and the position information of the head-mounted device may be obtained through a visual simultaneous localization and mapping (SLAM) method.

Here is just an example. The head-mounted device may also obtain the posture information of the human body through other ways, and the embodiments of the present application do not limit thereto.

After the posture information of the human body is obtained, the movement of the virtual character is controlled according to the position information of the human body, and the joint point of the virtual character is controlled to rotate according to the posture information of each joint point of the human body, so that the virtual character can be driven to move. The skeleton length of the human body corresponding to the posture information is matched with the skeleton length of the virtual character, so that the action of the virtual character can be more natural, the problems of clipping through, foot sliding step and the like of the virtual character are avoided, and the user experience is improved.

In this embodiment, the upper limb image and the lower limb image of the human body are captured by the camera of the head-mounted device. The skeleton length of the upper limb of the human body is determined according to the upper limb image, and the skeleton length of the lower limb of the human body is determined according to the lower limb image; other skeleton lengths of the human body are determined according to the skeleton length of the upper limb of the human body and/or the skeleton length of the lower limb of the human body; according to the determined skeleton length of the human body, the skeleton length of the virtual character in the extended reality scene is determined; by obtaining the posture information of the human body, the virtual character is displayed according to the posture information of the human body. Because the adjusted skeleton length of the virtual character matches the skeleton length of the human body, the virtual character is driven to move according to the posture information of the human body, so that the action of the virtual character is more natural, the problems of clipping through, sliding step and the like of the virtual character are avoided, and the user experience is improved.

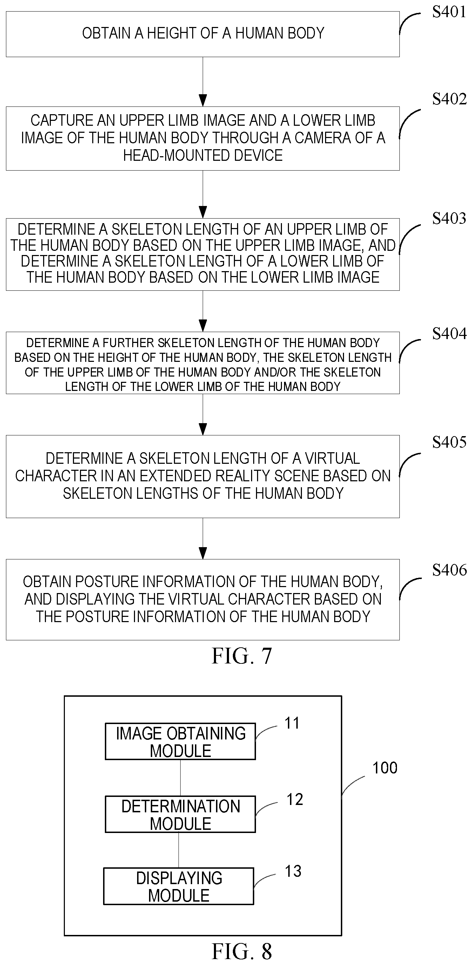

Based on Embodiment 3, Embodiment 4 of the present application provides a method of driving a virtual character. The same content is described with reference to the foregoing embodiment. FIG. 7 is a flowchart of a method of displaying a virtual character provided by Embodiment 4 of the present application. As shown in FIG. 7, the method provided by this embodiment includes the following steps.

At S401: obtain a height of a human body.

In an implementation, the height of the body input by a user is received. The user opens a page for skeleton adjustment and inputs the height of the human body in the page.

In another implementation, the height of the head-mounted device and the ground is detected, and the height of the human body is determined according to the height of the head-mounted device and the ground.

If the user is in a standing posture, the height of the head-mounted device and the ground is detected, the height of the head-mounted device and the ground can be detected through the SLAM module of the head-mounted device. The height of the head-mounted device and the ground can also be detected in other manners. For example, the height of the head-mounted device and the ground is measured through an ultrasonic sensor, an infrared distance measurement sensor and the like.

The head-mounted device is worn on the head of a human body. The height of the head-mounted device and the ground can be directly used as the height of the human body, and the height of the human body can be obtained after the height of the head-mounted device and the ground is adjusted. For example, the height of the human body is obtained by increasing 2 cm based on the height of the head-mounted device and the ground, or the height of the human body is obtained by decreasing 2 cm based on the height of the head-mounted device and the ground.

Optionally, when the height of the head-mounted device and the ground is detected, the height of the head-mounted device and the ground may be obtained through multiple detections.

Optionally, the application provides an adjustment option of the skeleton length of the virtual character. The user may select whether to adjust the skeleton length of the virtual character. If it is detected that the user starts the application, the adjustment option of the skeleton length of the virtual character is displayed. The adjustment option is used to select whether to adjust the skeleton length of the virtual character. The user may choose to adjust the skeleton length of the virtual character according to his own demand or may choose not to adjust.

In response to a determination instruction for the adjustment option, the adjustment function of the skeleton length of the virtual character is enabled to adjust the skeleton length of the virtual character. In response to a negative instruction to the adjustment option, the adjustment function of the skeleton length of the virtual character is closed, and the default skeleton length of the virtual character or the skeleton length used most recently is used. By providing the adjustment option of the skeleton length of the virtual character, the user can flexibly select whether to adjust according to his own needs, bringing a better experience to the user.

After the adjustment function of the skeleton length of the virtual character is enabled, some prompt information may be output, and the adjustment of the skeleton length of the virtual character is completed in cooperation with the user. For example, a function for adjusting a skeleton length of a virtual character is enabled, a page for adjusting the skeleton is displayed, and the page for adjusting the skeleton includes a height input item. After the user inputs the height of the human body, further, prompt information is displayed. The prompt information is used to prompt the user to lift both hands and kick forward with the left leg or the right leg. The prompt information may be displayed to the user in a text and/or voice manner.

Optionally, in an implementation, the application does not provide an adjustment option of the skeleton length of the virtual character, and the skeleton length of the virtual character must be adjusted by default. Only after the adjustment of the skeleton length of the virtual character is completed, the function of the application can be performed.

At S402: capture an upper limb image and a lower limb image of the human body through a camera of a head-mounted device.

At S403: determine a skeleton length of an upper limb of the human body based on the upper limb image, and determine a skeleton length of a lower limb of the human body based on the lower limb image.

At S404, determine a further skeleton length of the human body based on the height of the human body, the skeleton length of the upper limb of the human body and/or the skeleton length of the lower limb of the human body.

In an example implementation, the skeleton length of the neck to the waist is determined according to the height of the human body, the skeleton length of the lower limb of the human body, and the height of the head, wherein the head height of the human body may be a preset fixed value. The skeleton length of the neck to the chest, the skeleton length of the chest to the waist and the like are obtained according to a proportion relationship between the skeleton length of the neck to the waist and the skeleton length of the human body.

In another example implementation, other skeleton lengths of the human body are predicted by using a neural network model. The height of the human body, the skeleton length of the upper limb of the human body, and/or the skeleton length of the lower limb of the human body are input into a pre-trained skeleton prediction model to obtain the lengths of other skeletons of the human body.

It should be noted that step S401 and step S402 are not sequential or may be performed simultaneously.

At S405: determine a skeleton length of a virtual character in an extended reality scene based on skeleton lengths of the human body.

At S406: obtain posture information of the human body, and display the virtual character based on the posture information of the human body.

In this embodiment, by obtaining the height of the human body and by capturing the upper limb image and the lower limb image of the human body through the camera of the head-mounted device, the skeleton length of the upper limb of the human body is determined according to the upper limb image, and the skeleton length of the lower limb of the human body is determined according to the lower limb image. The lengths of other skeletons of the human body are determined according to the height of the human body, the skeleton length of the upper limb and/or the skeleton length of the lower limb. The skeleton length of the virtual character in the extended reality scene is determined according to the skeleton length of the human body, so that the skeleton length of the virtual character matches the skeleton length of the human body. In the method, by determining the lengths of other skeletons of the human body in combination with the height of the human body, the accuracy of lengths of other skeletons of the human body is improved. The virtual character is driven to move according to the posture information of the human body, causing the action of the virtual character to be more natural.

To better implement the method of displaying a virtual character in the embodiments of the present application, the embodiments of the present application further provide an apparatus for displaying a virtual character. FIG. 8 is a schematic diagram of a structure of an apparatus for displaying a virtual character provided by Embodiment 5 of the present application. As shown in FIG. 8, the apparatus for displaying a virtual character may include:
an image obtaining module 11 configured to obtain a limb image of a human body;
a determination module 12 configured to determine a skeleton length of a corresponding limb of the human body based on the limb image; and
a displaying module 13 configured to display a virtual character, a skeleton length of a limb of the virtual character being determined based on the skeleton length of the limb of the human body.

In some embodiments, the determination module 12 is further configured to: determine a further skeleton length of the human body based on the skeleton length of the limb of the human body; and the displaying module 13 is further configured to adjust a further skeleton length of the virtual character based on the further skeleton length of the human body.

In some embodiments, the apparatus further includes a height obtaining module configured to obtain a height of the human body.

The determination module 12 is specifically configured to determine the further skeleton length of the human body based on the height of the human body and the skeleton length of the limb of the human body.

In some embodiments, the determination module 12 is specifically configured to:
identify joint points of the limb of the human body based on the limb image;
determine three-dimensional (3D) coordinates of the joint points of the limb of the human body based on the limb image; and
determine the skeleton length of the limb of the human body based on the 3D coordinates of the joint points of the limb of the human body.

In some embodiments, the head-mounted device uses a binocular camera to capture the limb image.

The determination module 12 is specifically configured to determine the 3D coordinates of the joint points of the limb of the human body based on the limb image and a binocular parallax principle.

In some embodiments, the determination module 12 is specifically configured to input the limb image into a human body key point identification network to obtain the joint points of the limb of the human body.

In some embodiments, the height obtaining module is specifically configured to receive the height of the human body input by a user or detecting the height of the human body.

In some embodiments, the image obtaining module 11 is specifically configured to collect the limb image through a camera of a head-mounted device; wherein the virtual character is displayed in an extended reality scene of the head-mounted device.

In some embodiments, the apparatus further includes: a posture obtaining module configured to obtain posture information of the human body; and the displaying module 13 is specifically configured to display the virtual character based on the posture information of the human body.

In some embodiments, the apparatus further includes a prompting module configured to:
in response to detecting that a user starts an application, displaying a start option of a skeleton adjustment function of the virtual character, the skeleton adjustment function of the virtual character being used to adjust a skeleton length of the virtual character;
in response to a determination instruction for the start option, enabling the skeleton adjustment function of the virtual character; and
displaying prompt information for prompting the user to extend both hands forward and kick forward with a left leg or a right leg.

In some embodiments, the posture obtaining module is specifically configured to determine the posture information of the human body through inertial data measured by an inertial sensor (IMU) worn by the human body.

In some embodiments, the upper limb image includes a left upper limb and a right upper limb, and the lower limb image includes a left lower limb image and a right lower limb image.

The determination module 12 is specifically configured to:
determine a skeleton length of an upper limb of the human body based on the upper limb image; and
determine a skeleton length of a lower limb of the human body based on the left lower limb image and the right lower limb image.

In some embodiments, joint points of the upper limb comprise: a shoulder node, an elbow node, a wrist node and a finger node; and
joint points of the lower limb comprise: a hip node, a knee node, an ankle node, and a toe node.

It should be understood that the apparatus embodiments and the method embodiments may correspond to each other, and similar descriptions may refer to the method embodiments. To avoid repetition, details are not described herein again.

The apparatus 100 in the embodiments of the present application is described above from the perspective of functional modules with reference to the accompanying drawings. It should be understood that the functional modules may be implemented in hardware, or may be implemented by using instructions in a form of software, or may be implemented by combining hardware and software modules. Specifically, steps in the method embodiment in the embodiments of the present application may be completed by using an integrated logic circuit of hardware in a processor and/or instructions in a form of software, and steps of the method disclosed in the embodiments of the present application may be directly reflected as execution of a hardware decoding processor, or performed by combining hardware and software modules in a decoding processor. Optionally, a software module may be located in a mature storage medium in the art such as a random access memory, a flash memory, a read-only memory, a programmable read-only memory, an electrically erasable programmable memory, a register, and the like. The storage medium is located in the memory, the processor reads information in the memory, and completes the steps in the foregoing method embodiments in combination with hardware of the storage medium.

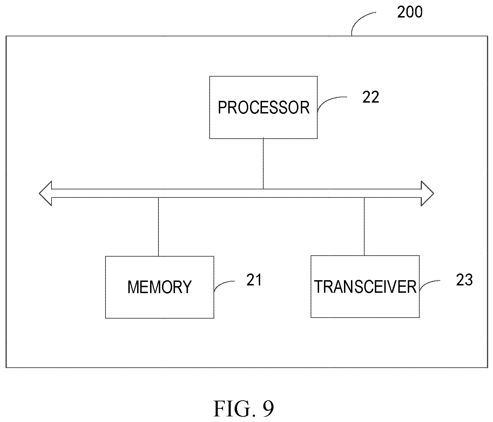

The embodiments of the present application further provide an electronic device. FIG. 9 is a schematic diagram of a structure of an electronic device provided by Embodiment 6 of the present application. As shown in FIG. 9, the electronic device 200 may include the following units.

A memory 21 and a processor 22. The memory 21 is configured to store a computer program and transmit the program code to the processor 22. In other words, the processor 22 may call the computer program from the memory 21and run the computer program to implement the method in the embodiments of the present application.

For example, the processor 22 may be configured to perform the foregoing method embodiments according to the instructions in the computer program.

In some embodiments of the present application, the processor 22 may include, but is not limited to: a general-purpose processor, a digital signal processor (DSP), an application specific integrated circuit (ASIC), a field programmable gate array (FPGA), or other programmable logic device, a discrete gate or transistor logic device, a discrete hardware component, or the like.

In some embodiments of the present disclosure, the memory 21 includes, but is not limited to: a volatile memory and/or non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM), which serves as an external cache. By way of example and not limitation, many forms of RAM are available, such as Static RAM (SRAM), Dynamic RAM (DRAM), Synchronous DRAM (SDRAM), Double Data Rate SDRAM (DDR SDRAM), Enhanced SDRAM (ESDRAM), Synch link DRAM (SLDRAM), and Direct Rambus RAM (DR RAM).

In some embodiments of the present application, the computer program may be divided into one or more modules, and the one or more modules are stored in the memory 21 and executed by the processor 22 to complete the method provided in the present application. The one or more modules may be a series of computer program instruction segments capable of completing a specific function, and the instruction segment is used to describe an execution process of the computer program in the electronic device.

As shown in FIG. 9, the electronic device 200 may further include a transceiver 23, and the transceiver 23 may be connected to the processor 22 or the memory 21.

The processor 22 may control the transceiver 23 to communicate with another device. Specifically, it may send information or data to another device, or receive information or data sent by another device. The transceiver 23 may include a transmitter and a receiver. The transceiver 23 may further include an antenna, and there may be one or more antennas.

It may be understood that although not shown in FIG. 9, the electronic device 200 may further include a camera module(s), a wireless fidelity WIFI module, a positioning module, a Bluetooth^{®} module, a display, a controller, and the like, and details are not described herein again.

It should be understood that various components in the electronic device are connected via a bus system, where the bus system includes not only a data bus but also a power bus, a control bus, and a status signal bus.

The present application further provides a computer storage medium having a computer program stored thereon, which, when executed by a computer, causes the computer to perform the method in the foregoing method embodiments. In other words, the embodiments of the present application further provide a computer program product including instructions, which, when executed by a computer, causes the computer to perform the method in the foregoing method embodiments.

The present application further provides a computer program product, where the computer program product includes a computer program, and the computer program is stored in a computer readable storage medium. A processor of the electronic device reads the computer program from the computer-readable storage medium, and the processor executes the computer program, so that the electronic device performs a corresponding procedure in the method for capturing a human body motion in the embodiments of the present application, and for brevity, details are not described herein again.

A method, apparatus, device, medium and program for displaying a virtual character provided by the embodiments of the present application, by obtaining a limb image of a human body, determine a skeleton length of a corresponding limb of the human body based on the limb image, and display a virtual character. A skeleton length of a limb of the virtual character is determined based on the skeleton length of the limb of the human body. The method can automatically detect the skeleton length of the limb of the human body, adjust the skeleton length of the limb of the virtual character based on the skeleton length of the limb of the human body, achieve flexible adjustment of the skeleton length of the limb of the virtual character and improve user experience.

In the several embodiments provided in the present application, it should be understood that the disclosed systems, apparatuses, and methods may be implemented in other manners. For example, the apparatus embodiments described above are merely illustrative. For example, the division of the modules is merely a logical function division, and in actual implementation, there may be another division manner. For example, multiple modules or components may be combined or may be integrated into another system, or some features may be ignored, or not executed. Alternatively, the mutual coupling or direct coupling or communication connection shown or discussed may be an indirect coupling or communication connection through some interfaces, apparatuses, or modules, and may be in electrical, mechanical, or other forms.

The modules described as separate components may or may not be physically separate, and the components displayed as modules may or may not be physical modules, that is, may be located in one place, or may be distributed to multiple network units. Some or all of the modules may be selected according to actual needs to achieve the purpose of solutions of the embodiments. For example, various functional modules in the various embodiments of the present application may be integrated into one processing module, or may be separately physically present by each module, or may be integrated in one module by two or more modules.

The foregoing is only specific implementations of the present application, but the protection scope of the present application is not limited thereto, and any person skilled in the art may easily conceive of variations or replacements within the technical scope disclosed by the present application, and should be covered within the protection scope of the present application. Therefore, the protection scope of the present application should be based on the protection scope of the claims.

## Claims

1. A method of displaying a virtual character, comprising:
obtaining (S101) a limb image of a human body;
determining (S102) a skeleton length of a corresponding limb of the human body based on the limb image; and
displaying (S103) a virtual character, a skeleton length of a limb of the virtual character being determined based on the skeleton length of the limb of the human body.

2. The method of claim 1, further comprising:
determining a further skeleton length of the human body based on the skeleton length of the limb of the human body; and
adjusting a further skeleton length of the virtual character based on the further skeleton length of the human body.

3. The method of claim 2, further comprising:
obtaining a height of the human body;
determining the further skeleton length of the human body based on the skeleton length of the limb of the human body comprises:
determining the further skeleton length of the human body based on the height of the human body and the skeleton length of the limb of the human body.

4. The method of claim 1, wherein determining the skeleton length of the corresponding limb of the human body based on the limb image comprises:
identifying joint points of the limb of the human body based on the limb image;
determining three-dimensional (3D) coordinates of the joint points of the limb of the human body based on the limb image; and
determining the skeleton length of the limb of the human body based on the 3D coordinates of the joint points of the limb of the human body.

5. The method of claim 4, wherein a head-mounted device uses a binocular camera to capture the limb image; and
determining the 3D coordinates of the joint points of the limb of the human body based on the limb image comprises:
determining the 3D coordinates of the joint points of the limb of the human body based on the limb image and a binocular parallax principle.

6. The method of claim 4, wherein identifying the joint points of the limb of the human body based on the limb image comprises:
inputting the limb image into a human body key point identification network to obtain the joint points of the limb of the human body.

7. The method of any of claims 1-6, wherein obtaining the limb image of the human body comprises:
collecting the limb image through a camera of a head-mounted device;
wherein the virtual character is displayed in an extended reality scene of the head-mounted device.

8. The method of claim 7, wherein the limb image is a limb image of a human body wearing the head-mounted device.

9. The method of claim 1, further comprising:
obtaining posture information of the human body; and
displaying the virtual character comprises:
displaying the virtual character based on the posture information of the human body.

10. The method of any of claims 1-6, further comprising:
in response to detecting that a user starts an application, displaying an adjustment option of the skeleton length of the virtual character;
in response to a determination instruction for the adjustment option, enabling an adjustment function of the skeleton length of the virtual character; and
displaying prompt information for prompting the user to extend both hands forward and kick forward with a left leg or a right leg.

11. The method of any of claims 1-6, wherein the limb image comprises an upper limb image and a lower limb image, the upper limb image comprises a left upper limb image and a right upper limb image, and the lower limb image comprises a left lower limb image and a right lower limb image; and
the determining a skeleton length of a corresponding limb of the human body based on the limb image comprises:
determining a skeleton length of an upper limb of the human body based on the upper limb image; and
determining a skeleton length of a lower limb of the human body based on the left lower limb image and the right lower limb image.

12. An apparatus (100) for displaying a virtual character, comprising:
an image obtaining module (11) configured to obtain a limb image of a human body;
a determination module (12) configured to determine a skeleton length of a corresponding limb of the human body based on the limb image; and
a displaying module (13) configured to display a virtual character, a skeleton length of a limb of the virtual character being determined based on the skeleton length of the limb of the human body.

13. An electronic device (200), comprising:
a processor (22) and a memory (21), wherein the memory (21) is configured to store a computer program, and the processor (22) is configured to call and run the computer program stored in the memory (21), to perform a method according to any of claims 1 to 11.

14. A computer readable storage medium configured to store a computer program, wherein the computer program causes a computer to perform a method according to any of claims 1 to 11.

15. A computer program product comprising a computer program, wherein the computer program, when executed by a processor, implements a method according to any of claims 1 to 11.
